# EUROPÄISCHE PATENTSCHRIFT

(11) **EP 0 910 943 B1**
(45) Veröffentlichungstag und Bekanntmachung des Hinweises auf die Patenterteilung: **27.03.2002**
(21) Anmeldenummer: 98114098.1
(22) Anmeldetag: 28.07.1998
(51) Int. Cl.: A01J 25/11

(54) **Vorrichtung zum Gewinnen von Käsemasse aus Milch**
Device for obtaining curd from milk
Dispositif d'obtention de caillé à partir de lait

(30) Priorität: 21.10.1997 DE 19746409
(43) Veröffentlichungstag der Anmeldung: 28.04.1999
(60) Teilanmeldung: 01115496.0
(73) Patentinhaber: ALPMA Alpenland Maschinenbau GmbH, 83543 Rott am Inn (DE)
(72) Erfinder: Hain, Gottfried, 83539 Pfaffing (DE); Dürmeier, Siegfried, 84556 Kartl (DE); Pypetz, Johann, 83539 Pfaffing (DE); Holzner, Stefan, 83569 Zaisering (DE)
(74) Vertreter: Finsterwald, Martin, Dr.

(56) Entgegenhaltungen:
- EP-A- 0 818 139
- DE-A- 19 531 601

## Beschreibung

Die Erfindung betrifft eine Vorrichtung zum Gewinnen von Käsemasse aus Milch gemäß dem Oberbegriff des Anspruchs 1.

Derartige Vorrichtungen dienen zur Käsebruchbereitung aus zuvor pasteurisierter Milch in einem kontinuierlichen Prozeß. Aus der deutschen Offenlegungsschrift DE 195 31 601 A1 ist eine solche Vorrichtung bekannt. Sie besitzt einen Trog mit einer als endloses Muldenband ausgebildeten Innenwand, welche kontinuierlich in einer Längs-Transportrichtung von einem Milch-Einfüllbereich über zumindest einen Koagulationsbereich und einen Bruch-Schneidbereich zu einem Austragsbereich transportiert wird.

Damit die Milch während des Transports innerhalb des Trogs störungsfrei und homogen koagulieren kann, muß sie strömungs-, wirbel- und erschütterungsfrei transportiert werden. Hierfür werden in im wesentlichen äquidistanten Abständen Trennwände halbkreisförmigen Umrisses in die Troginnenwand senkrecht zu deren Längsrichtung eingesetzt. Dadurch ist das Troginnenvolumen in Zellen unterteilt, in denen der Koagulationsvorgang ungestört ablaufen kann. Jeder Trennwand ist eine Spannvorrichtung zugeordnet, mittels der die aus nachgiebigem Material bestehende Troginnenwand unter geringfügiger Verformung um den ihr zugewandten runden Teilbereich des Trennwandumfangs gespannt werden kann. Dadurch wird zwischen Troginnenwand und Trennwand eine stabile und benachbarte Zellen gegeneinander abdichtende Verbindung erzeugt.

Die bekannte Vorrichtung besitzt den Nachteil, daß eine mit der Troginnenwand gekoppelte Trennwand in manchen Fällen nicht dem Druck einer Füllstandshöhendifferenz, der sich bei der Abgrenzung von unterschiedlich befüllten Zellen ergibt, standhalten kann. Die Trennwand kann dem hydrostatischen Druck des Inhalts der stärker befüllten Zelle nachgeben: Die der Troginnenwand zugewandte Stirnfläche der Trennwand gleitet dann derart entlang der Troginnenwand, daß die Trennwand-Unterseite in Richtung der weniger stark befüllten Zelle kippt.

Es ist eine Aufgabe der Erfindung, eine Vorrichtung der im Oberbegriff des Anspruchs 1 genannten Art dergestalt auszubilden, daß bei einfachem Aufbau sowie unkompliziertem Steuerablauf der Zellenbefüllung die Trennwände zwischen den Zellen dem Druck einer Füllstandshöhendifferenz zwischen benachbarten Zellen besser standhalten können. Weiterhin soll die Erfindung einen strömungsfreien kontinuierlichen Transport der Milch bzw. des Koagulums sowie die einfache Befolgung der die Hygiene betreffenden Anforderungen und Vorschriften ermöglichen.

Erfindungsgemäß wird die Aufgabe dadurch gelöst, daß zumindest eine Trennwand mittels der zugeordneten Spannvorrichtung um einen Neigungswinkel bezüglich der Vertikalen geneigt mit der Troginnenwand koppelbar ist.

Indem die Trennwände schräg in die Troginnenwand eingesetzt und mit dieser verspannt werden, können sie einer höheren einseitigen Druckbelastung standhalten. Gegenüber der üblichen Ausrichtung einer Trennwand, bei der sie innerhalb einer vertikalen Ebene senkrecht zu der Längsrichtung des Trogs angeordnet ist, ist bei der erfindungsgemäßen Vorrichtung das nach unten weisende, der Troginnenwand zugewandte Ende einer Trennwand bezüglich ihres oberen Endes in einer Richtung parallel zu der Trog-Längsrichtung verkippt, so daß die Trennwand im Seitenquerschnitt schräg gegenüber der Vertikalrichtung verläuft. Dabei ist das untere Ende der Trennwand gegenüber dem oberen Ende normalerweise in Richtung derjenigen Zelle versetzt, von der eine höhere Druckbelastung ausgehen soll, die also zu einem höheren Füllstand oder mit einer schwereren Flüssigkeit befüllt werden soll als die benachbarte, durch die schräge Trennwand abgegrenzte Zelle.

Im folgenden wird eine Trennwand als zu derjenigen Zelle hingeneigt bezeichnet, in deren unteren Bereich die Trennwand aufgrund ihrer schrägen Anordnung hineinragt und von deren oberen Bereich die Trennwand weg weist. Eine zu einer Zelle hingeneigte Trennwand begrenzt diese Zelle also dergestalt, daß die Zelle im Seitenquerschnitt das Profil einer Wanne aufweist. In diesem Sinne wird die Trennwand als weggeneigt von derjenigen Zelle bezeichnet, die der genannten Zelle über die schräge Trennwand benachbart ist.

Außerdem wird der Neigungswinkel einer gegenüber der Vertikalen schräg angeordneten Trennwand ab der Vertikalen gerechnet und als positiv bzw. negativ bezeichnet, wenn die Trennwand zu derjenigen Zelle hingeneigt ist, die bezüglich der Transportrichtung der Troginnenwand vor bzw. hinter der Trennwand vorgesehen ist.

Die Kraftwirkung des innerhalb einer befüllten Zelle wirkenden statischen Drucks wird an einer zu dieser Zelle hingeneigten Trennwand gemäß einem Kräfteparallelogramm derart aufgeteilt, daß eine Querkraft, also eine horizontale Kraftkomponente, die Trennwand seitlich von der Zelle wegdrückt und eine vertikale Kraftkomponente die Trennwand nach unten drückt. Aufgrund der schrägen Anordnung der Trennwand erfährt sie somit in horizontaler Richtung vorteilhaft eine geringere Kraftwirkung als eine vertikal ausgerichtete Trennwand. Die vertikal nach unten wirkende Kraftkomponente, die bei einer vertikal angeordneten Trennwand nicht auftritt, bewirkt eine zusätzliche Reibungskraft zwischen dem unteren, der Troginnenwand zugewandten Teilbereich der Stirnfläche der Trennwand und der Troginnenwand.

Falls also diejenige Zelle, zu der die Trennwand hingeneigt ist, zu einem höheren Füllstand mit einer Flüssigkeit befüllt ist als die bezüglich der Trennwand gegenüberliegende Zelle, so wirken auf diese schräge Trennwand weniger Querkräfte als auf eine entsprechende vertikale Trennwand. Zudem wirken auf die Trennwand vorteilhafte, die Reibung verstärkende Vertikalkräfte. Durch die erfindungsgemäße Ausgestaltung können die Trennwände somit einer höheren hydrostatischen Belastung widerstehen. Insbesondere können die Trennwände bei Anliegen derselben Spannkräfte über die Spannvorrichtung wie bei bekannten Vorrichtungen eine voll befüllte Zelle gegenüber einer leeren Zelle zumindest zeitweise abgrenzen, ohne daß ein ungewolltes Kippen der Trennwand auftritt.

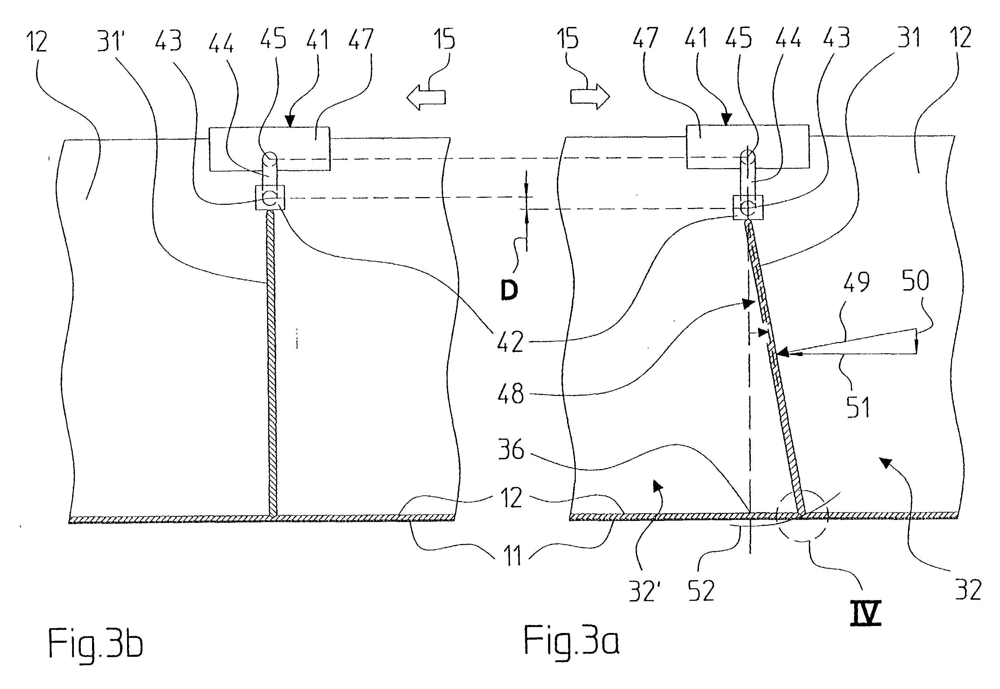

Die geneigte Anordnung einer Trennwand sowie die richtige Wahl des Neigungswinkels und der Neigungsrichtung können eine Selbststabilisierung der Kopplung der Trennwand mit der Troginnenwand bewirken (vgl. Fig. 3a): Falls der Inhalt derjenigen Zelle, zu der die Trennwand hingeneigt ist, einen großen Druck und somit eine hohe horizontale Kraftkomponente auf die Trennwand ausübt, ist es möglich, daß die Trennwand mit ihrer Stirnfläche entlang der Troginnenwand gleitet. Falls die Trennwand mittels der Spannvorrichtung am oberen Randbereich der Troginnenwand aufgehängt ist, führt sie dabei eine Aufrichtbewegung durch, bei der sich der Neigungswinkel der Trennwand bezüglich der Vertikalrichtung verringert. Jedoch vergrößert sich mit schwindendem Neigungswinkel die Projektion der Trennwandausdehnung auf die Vertikale, so daß die Trennwand in vertikaler Richtung eine immer größere Ausdehnung aufweist. Da die Troginnenwand diese vergrößerte Vertikalausdehnung nicht aufnehmen kann, verschiebt sich das obere Ende der Trennwand nach oben. Diese Verschiebung bewirkt eine Erhöhung der Spannkraft, die von der Spannvorrichtung auf die Trennwand übertragen wird. Dies kann den Anpreßdruck und somit die Reibungskraft zwischen der Trennwand und der Troginnenwand zunehmend erhöhen, so daß einer weiteren Aufrichtbewegung der Trennwand selbststabilisierend entgegengewirkt und eine verbesserte Dichtwirkung erreicht wird.

Die Möglichkeit, eine volle von einer leeren Zelle zumindest zeitweise abzugrenzen, ermöglicht eine einfache Ausgestaltung sowie einfache Produktionsabläufe der Vorrichtung: Einander benachbarte Zellen können nämlich in unmittelbarer zeitlicher Abfolge nacheinander jeweils vollständig befüllt werden. Somit kann eine einfache Verrohrung vorgesehen werden, die Einfüllrohre in geringen Abständen voneinander aufweisen kann.

Außerdem kann die Milch dabei leicht in konstantem Volumenstrom in die aufeinander folgenden Zellen eingefüllt werden. Dies erleichtert die Durchführung eines der Koagulationsvorrichtung vorgeschalteten Milchpasteurisierungsprozesses, beseitigt hierbei die Notwendigkeit der Verwendung von Zwischen- bzw. Pufferbehältern und ermöglicht es, ohne aufwendige Ventil- und Steuertechnik die Zellen zu einem gleichmäßigen, jeweils bekannten Füllstand zu befüllen.

Weiterhin kann die Befüllung einer Zelle nahe der Startposition dieser Zelle, d.h. unmittelbar nach Einsetzen ihrer Trennwände in die Troginnenwand, erfolgen. Dadurch kann bereits sehr nahe dieser Startposition mit dem Koagulationsvorgang begonnen werden, beispielsweise durch Zugabe von Lab, Kultur oder anderen Zusätzen. Die Vorrichtung weist somit eine Länge auf, die nur unwesentlich größer ist als die für den tatsächlichen Produktionsablauf benötigte Länge der Vorrichtung.

Das Betreiben der Vorrichtung mit einer halb mit Wasser gefüllten Zelle Vorlauf oder Nachlauf ist nur noch theoretisch zur Vermeidung von unvorhersehbaren Ablaufstörungen nötig. Falls die Vorrichtung mit einer halben Zelle Vorlauf betrieben wird, muß jedoch lediglich diese einzige Vorlaufzelle zur Hälfte mit Wasser befüllt werden, während die nachfolgende Zelle bereits voll mit Milch befüllt sein kann, so daß sich der Wasserverbrauch minimieren läßt.

Durch das zeitlich nacheinander erfolgende Befüllen räumlich benachbarter Zellen ist es auch auf vorteilhafte Weise möglich, einen Milchsortenwechsel direkt an einander benachbarten Zellen durchzuführen.

Bei einer bevorzugten Ausführungsform der erfindungsgemäßen Vorrichtung ist es möglich, die Trennwand wahlweise um einen positiven oder einen negativen Neigungswinkel gegenüber der Vertikalen verschwenkt mit der Troginnenwand zu koppeln. Dadurch kann jede Trennwand jeweils zu derjenigen Zelle hingeneigt mit der Troginnenwand verbunden werden, von der eine höhere Druckbelastung ausgehen soll als von der bezüglich der Trennwand gegenüberstehenden Zelle.

Die Neigung einer Trennwand sowie der durch die Spannvorrichtung bewirkte Anpreßdruck zwischen der Troginnenwand und der Trennwand bzw. die aufgrund dieses Anpreßdrucks bewirkte Verformung der Troginnenwand sollen so bemessen sein, daß die Trennwand Querkräften, welche aus einer Füllstandsdifferenz resultieren, letztendlich widersteht, so daß die Trennwand zumindest im wesentlichen bewegungsfrei mit der Troginnenwand gekoppelt bleibt.

Die von der Spannvorrichtung über die Trennwand auf die Troginnenwand ausgeübte Anpreßkraft weist bei einer geneigten Ausrichtung der Trennwand auch eine horizontale Komponente auf. Dadurch kann insbesondere bei fehlender Gegenbelastung der Trennwand durch hydrostatischen Druck die Gefahr bestehen, daß die Trennwand in Richtung dieser Horizontalkomponente und somit in Richtung eines größeren Neigungswinkels bzw. in Richtung der Zelle kippt, zu der die Trennwand hingeneigt ist. Der Neigungswinkel der Trennwand bezüglich der Vertikalen ist daher vorzugsweise so bemessen, daß die Trennwand auch ohne Beaufschlagung durch hydrostatischen Druck ihre geneigte Ausrichtung beibehält.

Der zu wählende Neigungswinkel hängt dabei von dem durch die Spannvorrichtung bewirkten Anpreßdruck zwischen Trennwand und Troginnenwand sowie von der Form und der Oberflächenbeschaffenheit des der Troginnenwand zugewandten Teilbereichs der Trennwand-Stirnfläche und der Oberflächenbeschaffenheit und Elastizität der Troginnenwand ab. Die erfindungsgemäße Vorrichtung funktioniert bei Verwendung bekannter Materialien besonders gut bei einem Neigungswinkel der Trennwände zwischen 3° und 10°. Vorzugsweise beträgt der Neigungswinkel zwischen 4° und 7°.

Es ist möglich, bei der erfindungsgemäßen Vorrichtung Trennwände bekannter Bauart schräg mit der Troginnenwand verspannt zu koppeln, wobei die der Trennwand zugeordnete Spannvorrichtung im wesentlichen starr mit der Trennwand verbunden ist. Diese starre Verbindung kann eine zusätzliche Stabilisierung der mit der Troginnenwand gekoppelten Trennwand gegenüber einer unbeabsichtigten, aufgrund an der Trennwand wirkenden hydrostatischen Drucks verursachten Kippbewegung bewirken.

Bei einer bevorzugten Ausführungsform der Vorrichtung ist an der Trennwand selbst oder an der ihr zugeordneten Spannvorrichtung eine Gelenkeinrichtung vorgesehen, durch welche die Trennwand um eine Drehachse geschwenkt werden kann. Die dabei vorgesehene Schwenkbewegung erfolgt derart, daß der Neigungswinkel der Trennwand bezüglich der Vertikalrichtung verringert oder vergrößert werden kann. Durch eine solche Gelenkeinrichtung wird das Aufrichten der Trennwand in Richtung einer vertikalen Ausrichtung bzw. zu einem geringerem Neigungswinkel zum Zwecke der vorstehend beschriebenen Selbststabilisierung erleichtert. Dabei kann die Aufhängung zwischen Troginnenwand und Trennwand bzw. Spannvorrichtung auf einfache Weise fix beibehalten werden, da eine Schwenkbewegung der Trennwand über die Gelenkeinrichtung keine Drehbewegung von Aufhängungsmitteln, beispielsweise Klemmelementen, über welche die Trennwand bzw. deren Spannvorrichtung mit der Troginnenwand verbunden ist, relativ zur Troginnenwand bewirkt und somit keine insbesondere vertikale Rutschbewegung der Aufhängungsmittel erfolgt.

Diese Gelenkeinrichtung kann an der Trennwand selbst oder an der ihr zugeordneten Spannvorrichtung vorgesehen sein, oder sie kann als Verbindung der Trennwand mit der Spannvorrichtung ausgebildet sein. Die Drehachse, um welche die Schwenkbewegung durchgeführt wird, läuft insbesondere senkrecht sowohl zu der Trog-Längsrichtung als auch der Vertikalrichtung. Falls zum Koppeln einer Trennwand mit der Troginnenwand über die Spannvorrichtung zwei Aufhängungspunkte vorgesehen sind, kann die Drehachse, um welche die Trennwand mittels der Gelenkeinrichtung schwenkbar ist, insbesondere parallel zu der Verbindungslinie zwischen den zwei Aufhängungspunkten verlaufen oder durch diese Verbindungslinie selbst gegeben sein.

Bei der vorstehend beschriebenen Gelenkeinrichtung ist es von Vorteil, wenn die Trennwand symmetrisch bezüglich einer Vertikalausrichtung in zwei entgegengesetzte Richtungen jeweils um einen Schwenkwinkel geschwenkt werden kann, damit sie wahlweise in positiver oder negativer Richtung verschwenkt in die Troginnenwand eingesetzt werden kann.

Vorzugsweise besitzt die erfindungsgemäße Vorrichtung zumindest im Einfüllbereich eine Vorrichtung zum Einsetzen der Trennwände und zumindest im Schneidbereich oder im Austragsbereich eine Vorrichtung zum Entnehmen der Trennwände. Diese Vorrichtungen können zum Einsetzen bzw. Entnehmen der Trennwände jeweils in geneigtem Zustand ausgebildet sein, so daß eine Trennwand beispielsweise bereits vor oder während des Einsetzens in die Troginnenwand bezüglich der Vertikalen geneigt werden und unmittelbar nach ihrem Einsetzen mittels der Spannvorrichtung geneigt mit der Troginnenwand gekoppelt werden kann. Vorzugsweise sind diese Vorrichtungen dergestalt ausgebildet, daß die Trennwände wahlweise mit positivem oder negativem Neigungswinkel eingesetzt bzw. entnommen werden können.

Es ist ferner bevorzugt, wenn zumindest eine Trennwand an ihrer der Troginnenwand zugewandten Stirnfläche zumindest bereichsweise eine erhöhte Rauheit aufweist.

Bei dieser Ausgestaltung der Trennwand weist also ein Bereich der der Troginnenwand zugewandten Trennwandstirnseite eine Oberflächen-Mikrogeometrie auf, welche andere Bereiche oder Seiten- oder Stirnflächen der Trennwand zugunsten einer glatteren Ausgestaltung nicht besitzen.

Dadurch kann die Reibung zwischen der Trennwand und der mit ihr gekoppelten Troginnenwand erhöht werden. Somit kann eine Trennwand, die mittels der Spannvorrichtung an der Troginnenwand befestigt ist, einem höheren Druck standhalten, der von einer Flüssigkeit ausgeübt wird, die sich innerhalb einer durch die Trennwand begrenzten Zelle befindet. Eine bezüglich einer Relativbewegung von Trennwand und Troginnenwand in Trog-Längsrichtung erhöhte Reibung kann dabei ein Verrutschen oder Wegkippen der Trennwand entlang der Troginnenwand in Richtung der aus dem hydrostatischen Druck resultierenden Querkraft verhindern. Dies gilt sowohl für vertikal als auch für geneigt im Trog angeordnete Trennwände.

Durch eine derartige Ausgestaltung der Vorrichtung bzw. ihrer Trennwände ist es also möglich, höhere Druckdifferenzen zwischen einander benachbarten Zellen in einer Trennwand aufzunehmen als bei bekannten Vorrichtungen. Dadurch erleichtern sich die übrige Ausgestaltung der Vorrichtung sowie die mit ihr durchzuführenden Produktionsabläufe.

Bei der genannten Stirnfläche der Trennwand handelt es sich insbesondere um eine Schmalseite bzw. Umfangsseite der vorzugsweise im wesentlichen flächigen Trennwand. Insbesondere wenn nicht der gesamte der Troginnenwand zugewandte Teil der Trennwand-Stirnfläche eine erhöhte Rauheit aufweist, sondern lediglich ein geeigneter Bereich hiervon, bewirkt dieser Bereich erhöhter Rauheit im wesentlichen keine Behinderung des Spannens der Troginnenwand um die Trennwand bzw. die genannte Stirnfläche.

Die vorteilhaft erhöhte Reibung zwischen einer Trennwand und der Troginnenwand bezüglich einer Relativbewegung in Trog-Längsrichtung läßt sich bei Verwendung bekannter Materialien bereits mit einer Rauheit von näherungsweise 1,0 µm oder einem geringeren Wert, insbesondere mit einer Rauheit von ungefähr 0,8 µm bis 1,0 µm erzielen, wobei sich die Größe der Rauheit betreffende Angaben in der Beschreibung oder den Ansprüchen auf den arithmetischen Mittenrauhwert Rₐ beziehen. Vorstehende Werte lassen sich vorteilhaft einfach mit den üblichen Aufrauhungsverfahren, wie beispielsweise Sandstrahlen, erreichen, und sie entsprechen sowohl den Hygiene-Anforderungen als auch den gängigen Konstruktionsrichtlinien.

Es ist bevorzugt, wenn sich ein Bereich der erhöhten Rauheit um das Zentrum der der Troginnenwand zugewandten Stirnfläche der Trennwand erstreckt. Insbesondere wenn der Umriß der Trennwand im wesentlichen die Form eines Halbkreises oder eines Kreissegments besitzt, kann sich ein Bereich erhöhter Rauheit entlang eines um die Mitte der Troginnenwand symmetrischen Winkelbereichs erstrecken, der vorzugsweise geringer ist als 90° und beispielsweise zwischen 40° und 45° beträgt. Dadurch wird die Reibung zwischen der Trennwand und der Troginnenwand bezüglich einer Relativbewegung in Trog-Längsrichtung erhöht, während beim Koppeln der Trennwand mit der Troginnenwand mittels der Spannvorrichtung die Troginnenwand in einer Richtung senkrecht zu der Trog-Längsrichtung besonders leicht entlang desjenigen Bereichs der Trennwand-Stirnfläche gleiten kann, der keine erhöhte Rauheit aufweist.

Die Erfindung funktioniert besonders gut, wenn eine Trennwand entlang ihrer der Troginnenwand zugewandten Stirnfläche mit einer dachförmigen Kante versehen ist, deren beide benachbart verlaufende Giebelflächen einen Innenwinkel von ungefähr 90° einschließen. Bei einer derartigen Ausgestaltung ist die mit der Troginnenwand gekoppelte Trennwand mit dieser besonders wirksam verbunden. Um die Trennwand entlang der Troginnenwand in Trog-Längsrichtung entgegen der durch die Spannvorrichtung verursachten Reibungskraft zu bewegen, muß nämlich eine zusätzliche Walkarbeit an der Troginnenwand verrichtet werden, so daß diese Ausgestaltung die Trennwände der erfindungsgemäße Vorrichtung noch weiter stabilisiert gegen Querkräfte, die aus Füllstandsdifferenzen benachbarter Zellen resultieren.

Im Falle der dachförmigen Ausbildung der Umfangskante einer Trennwand erweist es sich als besonders vorteilhaft, wenn der Außenradius des Kantenquerschnitts ungefähr 0,5 mm beträgt. In diesem Fall kann besonders sicher ausgeschlossen werden, daß die Troginnenwand bei einem Aufbau aus den üblichen Kunststoffmaterialien durch die Umfangskante Schaden erleidet.

Weitere bevorzugte Ausführungsformen der Erfindung sind in den Unteransprüchen beschrieben.

Die Erfindung wird nachfolgend anhand von Ausführungsbeispielen unter Bezugnahme auf die Zeichnungen beschrieben; in diesen zeigen:
- Fig. 1: eine schematische perspektivische Gesamtansicht einer Ausführungsform einer erfindungsgemäßen Vorrichtung,
- Fig. 2: eine schematische Darstellung eines senkrecht zur Transportrichtung verlaufenden Vertikalschnitts der Vorrichtung gemäß Fig. 1, wobei die gezeigte Trennwand sich in der Darstellung gemäß der rechten Hälfte der Fig. 2 in schräg eingesetztem Zustand und in der Darstellung gemäß der linken Hälfte in aufgerichteter, vertikaler Ausrichtung befindet,
- Fig. 3a u. 3b: schematische Ansichten eines Querschnitts durch diese Ausführungsform entlang der Ebene III gemäß Fig. 2 in den Richtungen A bzw. B, und
- Fig. 4: eine schematische Teilansicht der Trennwand und der Troginnenwand gemäß Fig. 3a.

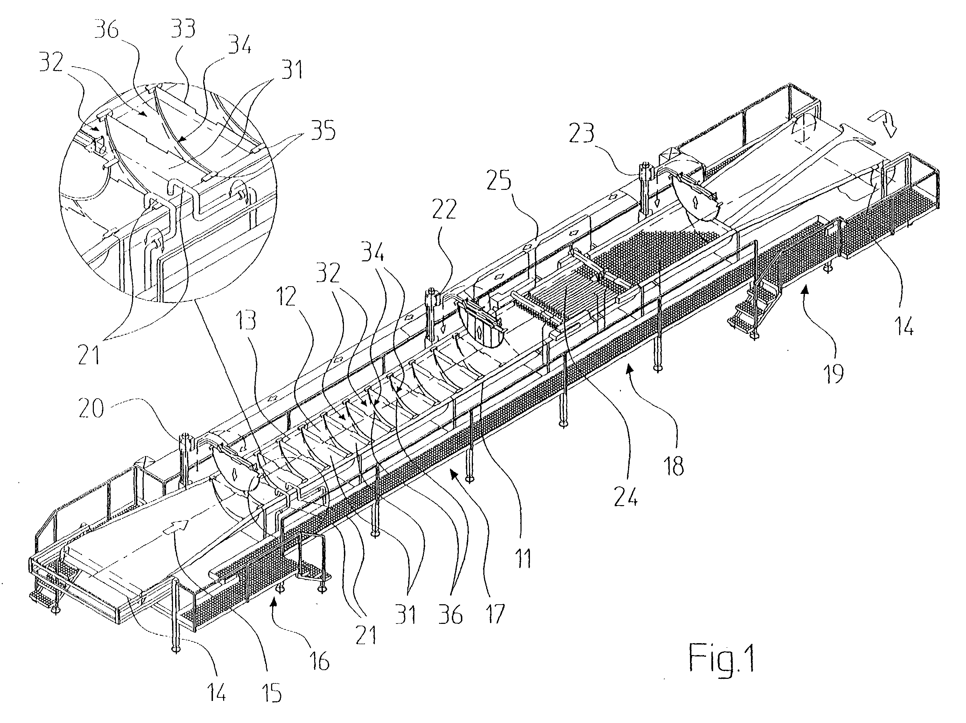

Fig. 1 zeigt schematisch eine perspektivische Gesamtansicht einer Ausführungsform einer erfindungsgemäßen Vorrichtung mit folgendem Grundaufbau: Die Vorrichtung weist einen langgestreckten Trog 11 aus Edelstahl auf, dessen nach oben offene Innenseite im Querschnitt im wesentlichen die Form eines Halbkreises besitzt. An der Innenseite des Trogs 11 liegt eine Troginnenwand 12 an. Diese besitzt somit im Bereich des Trogs 11 ebenfalls das Profil eines Halbkreises, wobei an beiden Längsseiten des Trogs 11 jeweils ein oberer Randbereich 13 der Troginnenwand 12 nach oben gerichtet übersteht.

Die Troginnenwand 12 ist als endloses Kunststoffband von ungefähr 5 mm Dicke ausgebildet. Sie erstreckt sich über die beiden Längsenden des Trogs 11 hinaus in Richtung jeweils einer Förderwalze 14, an der die Troginnenwand 12 mit geradlinigem Profil anliegt und um 180° umgelenkt wird. Beim Transport der Innenwand 12 mittels der Förderwalzen 14 bewegt sich die obere Hälfte der Innenwand 12 in eine Richtung 15.

Entlang dieser Transportrichtung 15 weisen der Trog 11 bzw. die Troginnenwand 12 einen Einfüllbereich 16, einen Koagulationsbereich 17, einen Schneidbereich 18 und einen Austragsbereich 19 auf. In dem Einfüllbereich 16 sind eine Trennwand-Einsetzeinrichtung 20 sowie zwei einander unmittelbar benachbarte Einfüllrohre 21 angeordnet. In dem Schneidbereich 18 sowie in dem Austragsbereich 19 befinden sich je eine Trennwand-Entnahmeeinrichtung 22 bzw. 23. Außerdem weist der Schneidbereich 18 eine Schneideinrichtung 24 auf. Seitlich benachbart zu dem Trog 11, parallel zu dessen Längsrichtung, verläuft eine Trennwand-Rücktransporteinrichtung 25.

Zwischen der Einsetzeinrichtung 20 und der Entnahmeeinrichtung 22 des Schneidbereichs 18 ist das Innenvolumen des Trogs 11 bzw. der Troginnenwand 12 durch äquidistante Trennwände 31 in Zellen 32 gleicher Länge, d.h. gleicher Ausdehnung in der Transportrichtung 15, unterteilt. Jede Trennwand 31 ist als Scheibe aus Edelstahl von ungefähr 10 mm Dicke ausgebildet und besitzt im wesentlichen den Umriß eines Halbkreises, wobei die Stirnfläche als horizontal verlaufende Oberkante 33 ausgebildet ist bzw. als Halbkreisumfangskante 34, deren Außenradius dem Innenradius des Querschnittprofils der Troginnenwand 12 entspricht.

Die Trennwände 31 sind mittels einer in Fig. 1 nicht dargestellten Spannvorrichtung mit der Troginnenwand 12 dergestalt gekoppelt, daß die Umfangskante 34 mit ihrer Stirnfläche an der Troginnenwand 12 anliegt und die Oberkante 33 senkrecht zu der Transportrichtung 15 steht und an ihren beiden Enden im wesentlichen jeweils an einem Aufhängungspunkt 35 im oberen Randbereich 13 der Troginnenwand 12 mündet. Durch die Spannvorrichtung wird eine relativ zwischen der Spannvorrichtung und den Aufhängungspunkten 35 der Troginnenwand 12 im wesentlichen vertikal wirkende Spannkraft ausgeübt, durch welche die jeweilige Trennwand 31 und die Troginnenwand 12 unter leichter Ausdehnung und Verformung der Troginnenwand 12 aneinander gepreßt werden.

Erfindungsgemäß sind die Trennwände 31 schräg in die Troginnenwand 12 eingesetzt und mit dieser gekoppelt. Die Neigung der Trennwände 31 in der Darstellung des fortschreitenden Produktionsablaufs gemäß Fig. 1 ist positiv, d.h. sie verläuft dergestalt, daß die Umfangskante 34 bezüglich der horizontalen Oberkante 33 in die Transportrichtung 15 geneigt ist; die Trennwand 31 ist also zu der in Richtung 15 vor ihr befindlichen Zelle 32 hingeneigt. Die Umfangskante 34 einer Trennwand 31 verläuft somit entlang der Troginnenwand 12 in Transportrichtung 15 versetzt bezüglich einer vertikalen Projektion 36 der Oberkante 33 auf die Troginnenwand 12. Vorzugsweise besitzt außerdem ein Bereich der Umfangskante 34 eine höhere Rauheit als andere Bereiche oder Flächen der Trennwand 31.

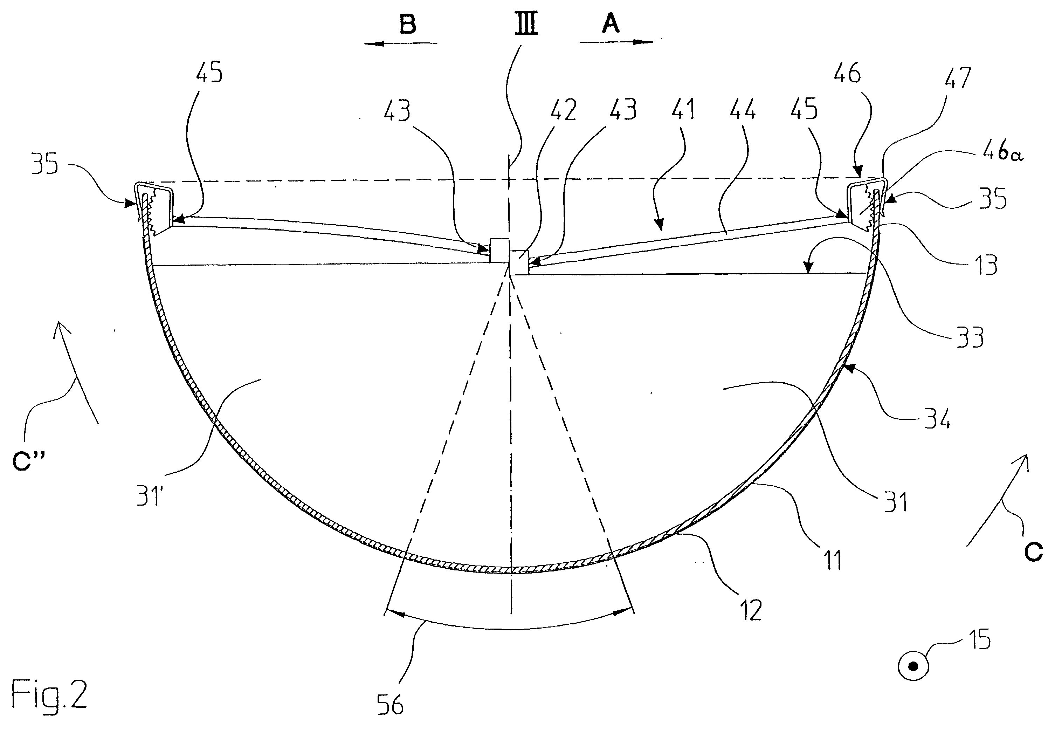

Die genaue Ausgestaltung der Trennwände 31 sowie die sich daraus ergebenden Vorteile werden nachstehend anhand der Figuren 2, 3a, 3b und 4 noch näher beschrieben.

Die in Fig. 1 dargestellte erfindungsgemäße Vorrichtung dient zur kontinuierlichen Koagulation von Milch zu Käsebruch. Hierfür werden durch die Troginnenwand 12 und die Trennwände 31 Zellen 32 gebildet, die von den Förderwalzen 14 kontinuierlich in Transportrichtung 15 befördert werden. Die Trennwände 31 werden von der Einsetzeinrichtung 20 im Einfüllbereich 16 in einem Neigungswinkel zur Vertikalen in die Troginnenwand 12 eingesetzt und durch Betätigung der zugeordneten Spannvorrichtung mit dieser gekoppelt.

Die von dieser Trennwand 31 begrenzte, bezüglich der Trennwand 31 in Transportrichtung 15 befindliche Zelle 32 kann über die Einfüllrohre 21 mit Milch befüllt werden. Der Koagulationsprozeß kann innerhalb dieser Zelle 32 während des Durchlaufens des Koagulationsbereichs 17 stattfinden. In Abhängigkeit von der herzustellenden Käsesorte kann die die Zelle 32 in Transportrichtung 15 begrenzende Trennwand 31 entweder von der Entnahmeeinrichtung 22 des Schneidbereichs 18 oder von der Entnahmeeinrichtung 23 des Austragsbereichs 19 von der Troginnenwand 12 gelöst und entfernt werden. Die entnommenen Trennwände 31 können von der Rücktransporteinrichtung 25 zurück zum Einfüllbereich 16 befördert werden. Die zwischen den beiden Entnahmeeinrichtungen 22, 23 angeordnete Schneideinrichtung 24 dient zum Zerschneiden der Käsemasse zu Käsebruch.

Durch die erfindungsgemäße Ausgestaltung der in Fig. 1 dargestellten Vorrichtung ergibt sich eine Vereinfachung der Produktionsabläufe, insbesondere des Produktionsbeginns, des Sortenwechsels und des Produktionsendes.

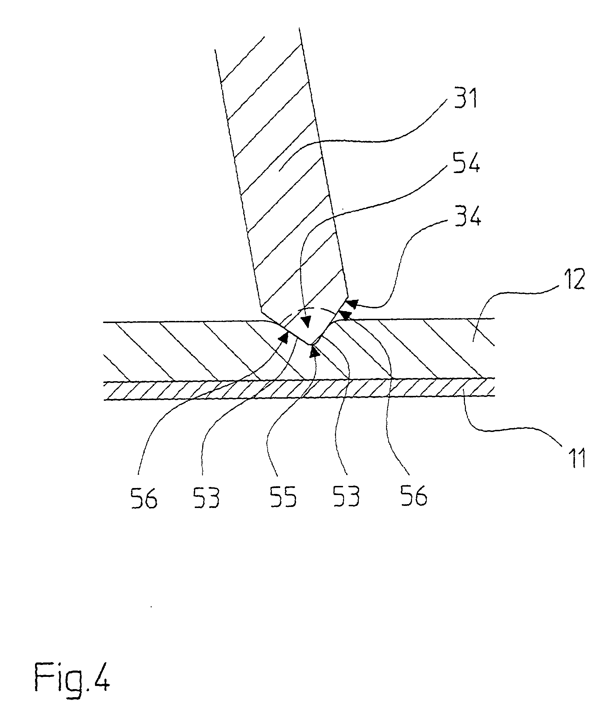

Fig. 2 zeigt einen senkrecht zur Transportrichtung 15 verlaufenden Vertikalschnitt von Teilen der Vorrichtung gemäß Fig. 1. Dabei zeigt die rechte Hälfte von Fig. 2 insbesondere eine geneigte Trennwand 31, deren Umfangskante 34 bezüglich der Oberkante 33 in Transportrichtung 15, also aus der Papierebene heraus, versetzt ist. Die hiervon durch die vertikal und senkrecht zur Papierebene verlaufende Ebene III abgegrenzte linke Hälfte der Fig. 2 zeigt eine aufrechte Trennwand 31', die parallel zur Vertikalen ausgerichtet ist. Die Figuren 3a und 3b zeigen jeweils eine Ansicht des Querschnitts entlang der Ebene III gemäß Fig. 2 in den Richtungen A bzw. B. Fig. 4 ist eine schematische Detailansicht des umrandeten Bereichs IV gemäß Fig. 3a.

In Fig. 2 sind der Trog 11 sowie die an dessen Innenseite anliegende Troginnenwand 12 mit ihrem über die obere Begrenzung des Trogs 11 hinausstehenden oberen Randbereich 13 zu erkennen. Weiterhin ist in der rechten und der linken Hälfte von Fig. 2 eine Trennwand 31 bzw. 31' dargestellt, die jeweils mittels einer Spannvorrichtung 41 mit der Troginnenwand 12 gekoppelt ist. Die Spannvorrichtung 41 weist eine am Zentrum der Trennwand-Oberkante 33 angeordnete Halterung 42 mit einem ersten Befestigungspunkt 43 auf. An dem Befestigungspunkt 43 ist ein Federstab 44 mit der Halterung 42 verbunden, der sich senkrecht zur Transportrichtung 15, also innerhalb der Papierebene, in Richtung des oberen Randbereichs 13 der Troginnenwand 12 erstreckt.

Das dem Befestigungspunkt 43 gegenüberliegende Ende des Federstabs 44 ist an einem zweiten Befestigungspunkt 45 mit einem Klemmelement 46 verbunden. Das Klemmelement 46 weist einen Gegenhaltebügel 47 mit einem U-förmigen Querschnitt auf, dessen offene Seite nach unten weist. Die beiden Schenkel des Gegenhaltebügels 47 umgreifen den oberen Randbereich 13 der Troginnenwand 12 jeweils an einem Aufhängungspunkt 35. Zwischen der Innenseite dieses oberen Randbereichs 13 und dem inneren Schenkel des Gegenhaltebügels 47 befindet sich außerdem ein Angriffsbereich 46a des Klemmelements 46.

In der Querschnittsdarstellung gemäß den Figuren 3a und 3b ist demzufolge von dem Klemmelement 46 lediglich jeweils der der Innenseite des Trogs 11 zugewandte Schenkel des Gegenhaltebügels 47 zu erkennen. Dieser ist teilweise von dem sich auch in vertikaler Richtung erstreckenden Federstab 44 verdeckt. Die beiden Befestigungspunkte 43, 45 des Federstabs 44 sind jeweils punktiert angedeutet.

Wie in der in Fig. 3a gezeigten Ansicht des Querschnitts durch die rechte Hälfte der Fig. 2 zu erkennen ist, ist die Trennwand 31 erfindungsgemäß bezüglich der Vertikalen um einen positiven Neigungswinkel 48 zu der rechten, also in Transportrichtung 15 befindlichen Zelle 32 hingeneigt. Der Neigungswinkel 48 beträgt 10°. Die in Fig. 3a dargestellte positive Neigung der Trennwand 31 entspricht generell der Neigungsrichtung einer Trennwand 31 im fortgeschrittenen Produktionsablauf, da die Trennwand 31 dabei eine neu gebildete und befüllte Zelle 32 gegen eine nachfolgend zu bildende, noch leere Zelle 32' besonders wirksam abgrenzt. Es ist jedoch auch möglich, die Trennwand 31 mittels der Einsetzeinrichtung 20 um denselben oder einen anderen Neigungswinkel 48 in negativer Richtung, also zu der bezüglich der Transportrichtung 15 hinter der Trennwand 31 angeordneten Zelle 32' hingeneigt mit der Troginnenwand 12 zu koppeln.

Die Trennwand 31 bzw. 31' kann dabei bezüglich der Spannvorrichtung 41 und insbesondere den Aufhängungspunkten 35 um den Neigungswinkel 48 in positiver oder negativer Neigungsrichtung frei geschwenkt werden. Hierfür ist die Trennwand 31 bzw. 31' mit der Halterung 42 über eine in den Figuren nicht dargestellte Gelenkeinrichtung verbunden, so daß die Trennwand 31 bzw. 31' eine freie Schwenkbewegung um ihre Oberkante 33 als Drehachse durchführen kann.

Mittels der Spannvorrichtung 41 kann die Trennwand 31 nach ihrem Einsetzen in die Troginnenwand 12 auf bekannte Weise mit dieser gekoppelt werden: Der obere Randbereich 13 der Troginnenwand 12 wird von dem Gegenhaltebügel 47 umschlossen. Bei anfänglicher Betätigung der Spannvorrichtung 41 wird der Angriffsbereich 46a an die Troginnenwand 12 gedrückt, so daß der Aufhängungspunkt 35 definiert ist, an dem das Klemmelement 46 an der Troginnenwand 12 fixiert ist. Hierfür weist der Angriffsbereich 46a eine entsprechende Oberflächen-Formgebung, wie beispielsweise eine Riffelung sowie eine das Klemmelement 46 schließende Vorspannung auf. Beim Loslassen der Spannvorrichtung 41 greift das Klemmelement 46 die Troginnenwand 12 und es wird eine zunehmende Spannkraft ausgeübt, durch welche zur mechanisch stabilen Kopplung von Trennwand 31 und Troginnenwand 12 der zwischen den beiden Aufhängungspunkten 35 befindliche Bereich der Troginnenwand 12 entlang der Umfangskante 34 der Trennwand 31 in den Zugrichtungen C und C" gespannt wird.

Falls die bezüglich der Transportrichtung 15 vor der in Fig. 3a dargestellten Trennwand 31 vorgesehene Zelle 32 zu einem höheren Füllstand oder mit einer Flüssigkeit einer höheren Dichte befüllt ist als die bezüglich der Trennwand 31 gegenüberliegende Zelle 32', wirkt auf die Trennwand 31 eine Druckkraft 49, die derart auf der Trennwand 31 senkrecht steht, daß ihre aus dem dargestellten Kräftedreieck ersichtliche vertikale Komponente 50 nach unten und ihre horizontale Komponente 51 als Querkraft von der Zelle 32 zu der Trennwand 31 gerichtet ist.

Die gemäß der Darstellung in Fig. 3a bezüglich der Vertikalen geneigte Trennwand 31 kann einer hohen Druckkraft 49 standhalten: Zum einen bewirkt nämlich die Vertikalkomponente 50 der Druckkraft 49 eine Erhöhung der mittels der Spannvorrichtung 41 zwischen der Trennwand 31 und der Troginnenwand 12 wirkenden Anpreßkraft. Eine Erhöhung dieser Anpreßkraft entspricht einer Verstärkung der Reibung zwischen der Trennwand 31 und der Troginnenwand 12, so daß die in Fig. 3a dargestellte Trennwand 31 einem hohen, in Richtung der Druckkraft 49 wirkenden Flüssigkeitsdruck widerstehen kann.

Zum anderen kann ein mögliches Schwenken der Trennwand 31 in Richtung einer vertikalen Ausrichtung eine weitere Erhöhung der Anpreßkraft und somit der Reibung zwischen der Trennwand 31 und der Troginnenwand 12 bewirken. Falls ein an der Trennwand 31 wirkender hydrostatischer Druck eine Querkraft 51 bewirkt, die größer ist als die ihr entgegengerichtete, zwischen der Umfangskante 34 der Trennwand 31 und der Troginnenwand 12 wirkende Reibungskraft, beginnt die Trennwand 31 mit ihrer Umfangskante 34 entlang der Troginnenwand 12 in Richtung der Horizontalkomponente 51 der Druckkraft 49 zu gleiten.

Dadurch führt die Trennwand 31 eine Schwenkbewegung um die Gelenkeinrichtung der Halterung 42 aus, wobei der Neigungswinkel 48 sich allmählich verringert und die horizontale Projektion des Umrisses der Trennwand 31 auf die Vertikale sich vergrößert. Dies ist anhand der in Fig. 3a dargestellten Kreislinie 52 veranschaulicht, die mit dem Radius der Umfangskante 34 der Trennwand 31 um die Gelenkeinrichtung an der Halterung 42 als Mittelpunkt eingezeichnet ist.

Da die Ausdehnung der Troginnenwand 12 nach unten durch den Trog 11 begrenzt ist, muß sich zum Schwenken der Trennwand 31 in Richtung eines geringeren Neigungswinkels 48 die Oberkante 33 der Trennwand 31 bzw. die Halterung 42 mit dem Federstab-Befestigungspunkts 43 nach oben bewegen. Dies bewirkt ein weiteres Spannen des Federstabs 44, so daß die von der Spannvorrichtung 41 bewirkte Anpreßkraft auf die Trennwand 31 noch weiter erhöht wird. Wie vorstehend bereits erläutert, führt dies zu einer Erhöhung der Reibung zwischen der Trennwand 31 und der Troginnenwand 12, die der Querkraft 51 entgegenwirkt.

Der Extremfall einer derartigen Schwenkbewegung ist in der linken Hälfte der Fig. 2 und in der Fig. 3b gezeigt: Hier steht die Trennwand 31' parallel zur Vertikalen, d.h. der Neigungswinkel 48 ist Null. Dementsprechend ist der Befestigungspunkt 43 des Federstabs 44 um einen Abstand D erhöht gegenüber seiner Position bei geneigter Trennwand 31 gemäß der rechten Hälfte der Fig. 2 bzw. gemäß Fig. 3a. Es ist zu beachten, daß der Befestigungspunkt 45 des Federstabs 44 bei beiden Neigungspositionen der Trennwand 31 bzw. 31' derselbe bleibt; das Klemmelement 46 bleibt mit dem oberen Randbereich 13 der Troginnenwand 12 fix verbunden. Auch sind in den Figuren der Übersichtlichkeit halber nicht dargestellte Stabilisierungsmittel vorgesehen, durch die sichergestellt wird, daß die Elemente der Spannvorrichtung 41 auch bei einem Verschwenken der mit der Troginnenwand 12 verspannten Trennwand 31 gemäß der Darstellung in Fig. 3a keine Drehbewegung durchführen.

Die Erhöhung der Stabilität der Trennwände 31 durch deren erfindungsgemäß schräges Einsetzen in die Troginnenwand 12 funktioniert besonders gut, wenn die Umfangskante 34 einer Trennwand 31 gemäß der Querschnittsdarstellung in Fig. 4 ausgebildet ist: Die Umfangskante 34 besitzt zwei Giebelflächen 53, die symmetrisch zueinander angeordnet sind und einen Giebelwinkel 54 von ungefähr 90° miteinander einschließen. Die von den beiden Kantengiebeln 53 gebildete Spitze der Umfangskante 34 weist einen Außenradius 55 von ungefähr 0,5 mm auf.

Durch die in Fig. 4 dargestellte Ausgestaltung der Umfangskante 34 wird die für eine Bewegung der Trennwand 31 entlang der Troginnenwand 12 benötigte Walkarbeit vorteilhaft erhöht, ohne daß die Troginnenwand 12 durch die Umfangskante 34 beschädigt wird.

Vorzugsweise weisen die Trennwände 31 bzw. 31' der vorstehend beschriebenen Vorrichtung einen symmetrisch um die Mittelebene III gemäß Fig. 2 verlaufenden Winkelbereich 56 erhöhter Rauheit auf. Dieser Winkelbereich 56 ist auf den Mittelpunkt der durch die Umlaufkante 34 gebildeten Kreislinie bezogen, und er beträgt insgesamt ungefähr 40° bis 45°. Der Winkelbereich 56 erstreckt sich entlang der beiden Giebelflächen 53 der Umlaufkante 34. Die Rauheit der Giebelflächen 53 beträgt dort ungefähr zwischen 0,8 µm und 1,0 µm, während die anderen Seiten- und Stirnflächen einer Trennwand 31 bzw. 31', insbesondere die verbleibenden Bereiche der Giebelflächen 53, eine geringere Rauheit aufweisen.

Durch das Versehen der Giebelflächen 53 mit einer höheren Rauheit entlang des Winkelbereichs 56 wird die parallel zur Transportrichtung 15 wirkende Reibungskraft zwischen dem Winkelbereich 56 der Trennwand 31 bzw. 31' und der mit dieser gekoppelten Troginnenwand 12 vorteilhaft erhöht.

Gleichzeitig bleiben die außerhalb des Winkelbereichs 56 zwischen der Trennwand 31 bzw. 31' und der Troginnenwand 12 wirkenden Reibungskräfte im wesentlichen unbeeinflußt. Zu diesen gehören diejenigen Reibungskräfte, die entgegen den Zugrichtungen C und C", also tangential zur Umfangskante 34 und senkrecht zur Längsrichtung 15 gerichtet sind. Diese Reibungskräfte wirken beim Verspannen einer Trennwand 31 bzw. 31' mit der Troginnenwand 12 einer tangentialen Relativbewegung der Troginnenwand 12 bezüglich der Umfangskante 34 entgegen. Somit behindern diese Reibungskräfte das Koppeln einer Trennwand 31 bzw. 31' mit der Troginnenwand 12, und sie sind daher unerwünscht. Durch die Ausgestaltung lediglich des Winkelbereiches 56 der Umfangskante 34 mit einer erhöhten Rauheit verbleibt also ein Bereich der Umfangskante 34, entlang dem die Troginnenwand 12 vorteilhaft ohne erhöhte Reibung zum Koppeln mit der Trennwand 31 bzw. 31' bewegt werden kann.

Durch die vorstehend beschriebene Ausgestaltung der Vorrichtung, insbesondere durch das erfindungsgemäße schräge Einsetzen der Trennwände 31 sowie durch die Ausgestaltung der Trennwände 31 bzw. 31' mit einem Winkelbereich 56 erhöhter Rauheit, ist es möglich, einander benachbarte Zellen 32 bzw. 32' zu unterschiedlichen Höhen zu befüllen. Insbesondere vermag eine solche in einem Bereich 56 aufgerauhte, schräg in die Troginnenwand 12 eingesetzte Trennwand 31, eine vollständig befüllte Zelle 32, zu der die Trennwand 31 hingeneigt ist, gegenüber einer leeren Zelle 32', von der die Trennwand 31 weggeneigt ist, zumindest zeitweise abzugrenzen. Dadurch können aufeinanderfolgende Zellen in unmittelbarer zeitlicher Abfolge jeweils in einem Zug vollständig befüllt werden, was die mit der Vorrichtung durchzuführenden Produktionsabläufe vorteilhaft vereinfacht.

### BEZUGSZEICHENLISTE

- 11: Trog
- 12: Troginnenwand
- 13: oberer Randbereich
- 14: Förderwalze
- 15: Transportrichtung
- 16: Einfüllbereich
- 17: Koagulationsbereich
- 18: Schneidbereich
- 19: Austragsbereich
- 20: Einsetzeinrichtung
- 21: Einfüllrohr
- 22: Entnahmeeinrichtung
- 23: Entnahmeeinrichtung
- 24: Schneideinrichtung
- 25: Rücktransporteinrichtung
- 31: geneigte Trennwand
- 31': vertikale Trennwand
- 32: Zelle
- 32': Zelle
- 33: Oberkante
- 34: Umfangskante
- 35: Aufhängungspunkt
- 36: Oberkanten-Projektion
- 41: Spannvorrichtung
- 42: Halterung
- 43: Befestigungspunkt
- 44: Federstab
- 45: Befestigungspunkt
- 46: Klemmelement
- 46a: Angriffsbereich des Klemmelements
- 47: Gegenhaltebügel
- 48: Neigungswinkel
- 49: Druckkraft
- 50: Vertikalkomponente
- 51: Horizontalkomponente
- 52: Kreislinie
- 53: Giebelfläche
- 54: Giebelwinkel
- 55: Außenradius
- 56: Winkelbereich

- A: Ansichtsrichtung
- B: Ansichtsrichtung
- C: Zugrichtung
- C": Zugrichtung
- D: Abstand

## Patentansprüche

1. Vorrichtung zum Gewinnen von Käsemasse aus Milch mit einem langgestreckten Trog (11), der an seinem einen Ende mit einem Einfüllbereich (16) und an seinem anderen Ende mit einem Austragsbereich (19) versehen ist und eine zumindest im wesentlichen kontinuierlich zwischen Einfüll- (16) und Austragsbereich (19) transportierbare Innenwand (12) aufweist,
wobei das Trogvolumen durch eine Anzahl von dem Trogquerschnitt angepaßten, mit der Innenwand (12) koppelbaren und gemeinsam mit dieser bewegbaren Trennwänden (31, 31') in in Längsrichtung aufeinanderfolgende Zellen (32, 32') unterteilbar ist
und jeder Trennwand (31, 31') eine Spannvorrichtung (41) zugeordnet ist, mittels der die aus nachgiebigem Material bestehende Troginnenwand (12) unter geringfügiger Verformung um den ihr zugewandten Teilbereich (34) des Trennwandumfangs spannbar ist,
wodurch zwischen den einander zugewandten Bereichen von Troginnenwand (12) und Trennwand (31, 31') eine mechanisch stabile und benachbarte Zellen (32, 32') gegeneinander abdichtende Verbindung erzeugbar ist,
**dadurch gekennzeichnet,**
**daß** zumindest eine Trennwand (31, 31') mittels der zugeordneten Spannvorrichtung (41) um einen Neigungswinkel (48) bezüglich der Vertikalen geneigt mit der Troginnenwand (12) koppelbar ist.

2. Vorrichtung nach Anspruch 1,
**dadurch gekennzeichnet,**
**daß** die Trennwand (31, 31') wahlweise um einen positiven oder negativen Neigungswinkel (48) gegenüber der Vertikalen verschwenkt mit der Troginnenwand (12) koppelbar ist.

3. Vorrichtung nach einem der Ansprüche 1 oder 2,
**dadurch gekennzeichnet,**
**daß** der Neigungswinkel (48) zwischen der Trennwand (31, 31') und der Vertikalen sowie der durch die Spannvorrichtung (41) bewirkte Anpreßdruck zwischen Troginnenwand (12) und Trennwand (31, 31', 72) bzw. die durch die Trennwand (31, 31') bewirkte Verformung der Troginnenwand (12) so bemessen sind, daß die mit der Troginnenwand (12) gekoppelte Trennwand (31, 31') zur Aufnahme von durch unterschiedliche Füllstände benachbarter Zellen (32, 32') erzeugten Querkräften und zur Beibehaltung ihres Neigungswinkels (48) geeignet ist.

4. Vorrichtung nach einem der vorstehenden Ansprüche,
**dadurch gekennzeichnet,**
**daß** der Neigungswinkel (48) zwischen 3° und 10°, vorzugsweise zwischen 4° und 7°, beträgt.

5. Vorrichtung nach einem der vorstehenden Ansprüche,
**dadurch gekennzeichnet,**
**daß** die Trennwand (31, 31') und/oder die ihr zugeordnete Spannvorrichtung (41) eine Gelenkeinrichtung (43) aufweist, mittels welcher die Trennwand (31, 31') um eine Drehachse schwenkbar ist, die insbesondere auf der Trog-Längsrichtung und der Vertikalen senkrecht steht.

6. Vorrichtung nach Anspruch 5,
**dadurch gekennzeichnet,**
**daß** die Drehachse parallel verläuft oder im wesentlichen zusammenfällt mit der Verbindungslinie zwischen zwei Aufhängungspunkten (35), an denen die Spannvorrichtung (41) mit der Troginnenwand (12) koppelbar ist.

7. Vorrichtung nach einem der vorstehenden Ansprüche,
**dadurch gekennzeichnet,**
**daß** zumindest im Einfüllbereich (16) eine Vorrichtung (20) zum Einsetzen der Trennwände (31, 31') und zumindest im Austragsbereich (19) eine Vorrichtung (22, 23) zum Entnehmen der Trennwände (31, 31') vorgesehen ist, wobei die Vorrichtungen zum im geneigten Zustand erfolgenden Einsetzen (20) bzw. Entnehmen (22, 23) der Trennwände (31, 31') ausgebildet sind.

8. Vorrichtung nach Anspruch 7,
**dadurch gekennzeichnet,**
**daß** die Trennwände (31, 31') durch die Einsetz- (20) und Entnahme-Vorrichtungen (22, 23) wahlweise um einen positiven oder einen negativen Neigungswinkel (48) gegenüber der Vertikalen verschwenkt in die Troginnenwand (12) einsetzbar bzw. aus dieser entnehmbar sind.

9. Vorrichtung nach einem der vorstehenden Ansprüche,
**dadurch gekennzeichnet,**
**daß** zumindest eine Trennwand (31, 31') an ihrer der Troginnenwand (12) zugewandten Stirnfläche (34) zumindest bereichsweise (56) eine erhöhte Rauheit aufweist.

10. Vorrichtung nach Anspruch 9,
**dadurch gekennzeichnet,**
**daß** der Mittenrauhwert der erhöhten Rauheit näherungsweise 1,0 Mikrometer beträgt oder geringer ist als dieser Wert.

11. Vorrichtung nach einem der Ansprüche 9 oder 10,
**dadurch gekennzeichnet,**
**daß** sich ein Bereich (56) erhöhter Rauheit entlang der der Troginnenwand (12) zugewandten Stirnfläche (34) einer Trennwand (31, 31') in einem insbesondere symmetrischen Winkelbereich (56) um die Mitte der Troginnenwand (12) erstreckt, wobei der Winkelbereich (56) geringer als 90° ist und bevorzugt zwischen 40° und 45° beträgt.

12. Vorrichtung nach einem der vorstehenden Ansprüche,
**dadurch gekennzeichnet,**
**daß** eine Trennwand (31, 31') an ihrer der Troginnenwand (12) zugewandten Stirnfläche (34) mit einer dachförmigen Kante (34) versehen ist, wobei die beiden durch die Kante (34) verbundenen Giebelflächen (53) einen Innenwinkel (54) von ungefähr 90° einschließen.

13. Vorrichtung nach Anspruch 12,
**dadurch gekennzeichnet,**
**daß** der Außenradius (55) des Querschnitts der dachförmigen Kante (34) ungefähr 0,5 mm beträgt.

## Claims

1. Apparatus for obtaining cheese material from milk comprising an elongate trough (11) which is provided at its one end with a filling zone (16) and at its other end with a discharge zone (19) and which has an inner wall (12) which is transportable at least substantially continuously between the filling zone (16) and the discharge zone (19), wherein the volume of the trough can be subdivided by a number of partition walls (31, 31') which are matched to the trough cross-section, which can be coupled to the inner wall (12), and which are movable jointly with the latter, into cells (32, 32') which follow one another in the longitudinal direction, and wherein a clamping device (41) is associated with each partition wall (31, 31') by means of which the inner wall (12) of the trough, which consists of a flexible material, can be clamped with slight deformation around the region (34) of the periphery of the partition wall confronting it, whereby a mechanically stable connection which seals adjacent cells (32, 32') relative to one another can be produced between the mutually confronting regions of the inner wall (12) of the trough and the partition walls (31, 31'), **characterized in that** at least one partition wall (31, 31') can be coupled by means of the associated clamping device (41) to the inner wall (12) of the trough inclined at an angle of inclination (48) with respect to the vertical.

2. Apparatus in accordance with claim 1, **characterized in that** the partition wall (31, 31') can be coupled to the inner wall (12) of the trough pivoted relative to the vertical optionally by a positive or negative angle of inclination (48).

3. Apparatus in accordance with any one of claims 1 or 2, **characterized in that** that the angle of inclination (48) between the partition wall (31, 31') and the vertical and also the contact pressure brought about by the clamping device (41) between the inner wall (12) of the trough and the partition wall (31, 31', 72), or the deformation of the inner wall of the trough (12) brought about by the partition wall (31, 31'), are so dimensioned that the partition wall (31, 31') coupled to the inner wall (12) of the trough is suited to bear transverse forces produced by different states of filling of adjacent cells (32, 32') and to retain its angle of inclination (48).

4. Apparatus in accordance with any one of the preceding claims, **characterized in that** the angle of inclination (48) amounts to between 3° and 10°, preferably to between 4° and 7°.

5. Apparatus in accordance with any one of the preceding claims, **characterized in that** the partition wall (31, 31') and/or the clamping device (41) associated with it has a hinge means (43) with which the partition wall (31, 31') can be pivoted about an axis of rotation which in particular stands perpendicular to the longitudinal direction of the trough and to the vertical.

6. Apparatus in accordance with claim 5, **characterized in that** the axis of rotation extends parallel to or substantially coincides with the connection line between two suspension points (35) at which the clamping device (41) can be coupled to the inner wall (12) of the trough.

7. Apparatus in accordance with any one of the preceding claims, **characterized in that** an apparatus for the insertion of the partition walls (31, 31') is provided at least in the filling zone (16) and an apparatus (22, 23) for removing the partition wall (31, 31') is provided at least in the discharge zone (19), with the apparatuses being designed for the insertion (20) and removal (22, 23) respectively of the partition walls (31, 31') in the inclined state.

8. Apparatus in accordance with claim 7, **characterized in that** the partition walls (31, 31') can be respectively inserted into or removed from the inner wall (12) of the trough by the insertion apparatus (20) and by the removal apparatuses (22, 23), while pivoted relative to the vertical, optionally by a positive or a negative angle of inclination.

9. Apparatus in accordance with any one of the preceding claims, **characterized in that** at least one partition wall (31, 31') has an increased roughness at least regionally (56) at its end surface (34) confronting the inner wall (12) of the trough.

10. Apparatus in accordance with claim 9, **characterized in that** the mean roughness value of the increased roughness amounts to approximately 1.0 microns or is less than this value.

11. Apparatus in accordance with any one of claims 9 or 10, **characterized in that** a region (56) of increased roughness extends along the end surface (34) of a partition wall (31, 31') confronting the inner wall (12) of the trough, in an in particular symmetrical angular range (56) about the center of the inner wall (12) of the trough, with the angular range (56) being smaller than 90° and preferably amounting to between 40° and 45°.

12. Apparatus in accordance with any one of the preceding claims, **characterized in that** a partition wall (31, 31') is provided at its end surface (34) confronting the inner wall (12) of the trough with a roof-like edge (34), with the two ridge surfaces (53) connected by the edge (34) including an internal angle (54) of approximately 90°.

13. Apparatus in accordance with claim 12, **characterized in that** the outer radius (55) of the cross-section of the roof-like edge (34) amounts to approximately 0.5 mm.

## Revendications

1. Dispositif destiné à la préparation du caillé à partir du lait, comprenant une cuve allongée (11), dont une des extrémités est munie d'une zone de remplissage (16) et dont l'autre extrémité est munie d'une zone de déversement (19), et une paroi intérieure (12) se déplaçant au moins sensiblement en continu entre la zone de remplissage (16) et la zone de déversement (19),
dans lequel le volume de la cuve peut être divisé en cellules (32, 32'), se succédant dans le sens longitudinal, au moyen d'un nombre de cloisons (31, 31') adaptées à la section de la cuve, pouvant être assemblées à la paroi intérieure (12) et étant entraînées avec celle-ci,
et un dispositif de tension (41) est associé à chaque cloison (31, 31'), par l'intermédiaire duquel la paroi intérieure (12) de la cuve formée par un matériau élastique peut être tendue avec une faible déformation autour de la zone partielle (34), orientée vers celle-ci, sur la périphérie de la cloison,
à la suite de quoi il peut se former entre les zones orientées l'une vers l'autre de la paroi intérieure (12) et de la cloison (31, 31') un assemblage mécaniquement stable et rendant étanche les cellules (32, 32') contiguës,
**caractérisé en ce qu'**au moins une cloison (31, 31') peut être assemblée avec la paroi intérieure (12) de la cuve au moyen du dispositif de tension (41) associé, incliné selon un angle d'inclinaison (48) par rapport à la verticale.

2. Dispositif selon la revendication 1, **caractérisé en ce que** la cloison (31, 31') peut être assemblée avec la paroi intérieure (12) de la cuve, en étant inclinée au choix selon un angle d'inclinaison (48) positif ou négatif par rapport à la verticale.

3. Dispositif selon l'une des revendications 1 ou 2, **caractérisé en ce que** l'angle d'inclinaison (48) entre la cloison (31, 31') et la verticale, ainsi que la force de pression exercée par le dispositif de tension (41) entre la paroi intérieure (12) de la cuve et la cloison (31, 31') ou la déformation de la paroi intérieure (12) de la cuve provoquée par la cloison (31, 31') sont dimensionnés de telle sorte que la cloison (31, 31') assemblée à la paroi intérieure (12) de la cuve est apte à absorber les forces transversales générées par les niveaux de remplissage différents des cellules (32, 32') contiguës et à maintenir son angle d'inclinaison (48).

4. Dispositif selon l'une des revendications précédentes, **caractérisé en ce que** l'angle d'inclinaison (48) est égal à une valeur comprise entre 3° et 10°, de préférence entre 4° et 7°.

5. Dispositif selon l'une des revendications précédentes, **caractérisé en ce que** la cloison (31, 31') et/ou le dispositif de tension (41) qui lui est associé comportent un système articulé (43), au moyen duquel la cloison (31, 31') peut pivoter autour d'un axe de rotation, qui est disposé en particulier perpendiculairement au sens longitudinal de la cuve et à la verticale.

6. Dispositif selon la revendication 5, **caractérisé en ce que** l'axe de rotation est parallèle ou coïncide sensiblement avec la ligne de liaison entre deux points de suspension (35), au niveau desquels le dispositif de tension (41) peut être assemblé à la paroi intérieure (12) de la cuve.

7. Dispositif selon l'une des revendications précédentes, **caractérisé en ce qu'**il est prévu, au moins dans la zone de remplissage (16), un dispositif (20) destiné à la mise en place des cloisons (31, 31') et, au moins dans la zone de déversement (19), un dispositif (22, 23) destiné à retirer les cloisons (31, 31'), les dispositifs étant conçus pour mettre en place (20) ou retirer (22, 23) les cloisons (31, 31') dans la position inclinée.

8. Dispositif selon la revendication 7, **caractérisé en ce que** les dispositifs de mise en place (20) et de prélèvement (22, 23) permettent de mettre en place ou de retirer les cloisons (31, 31') dans la paroi intérieure (12) de la cuve en les faisant pivoter au choix selon un angle d'inclinaison (48) positif ou négatif par rapport à la verticale.

9. Dispositif selon l'une des revendications précédentes, **caractérisé en ce qu'**au moins une cloison (31, 31'), sur sa face frontale (34) orientée vers la paroi intérieure (12) de la cuve, comporte au moins dans certaines zones (56) une rugosité plus marquée.

10. Dispositif selon la revendication 9, **caractérisé en ce que** la valeur moyenne de la rugosité plus marquée est approximativement égale à 1,0 micromètre ou est inférieure à cette valeur.

11. Dispositif selon une dès revendications 9 ou 10, **caractérisé en ce qu'**une zone (56) à rugosité plus marquée, le long de la face frontale (34), orientée vers la paroi intérieure (12) de la cuve, d'une cloison (31, 31'), s'étend dans une zone angulaire (56), en particulier symétrique, autour du milieu de la paroi intérieure (12) de la cuve, sachant que la zone angulaire (56) est inférieure à 90° et comprise de préférence entre 40° et 45°.

12. Dispositif selon l'une des revendications précédentes, **caractérisé en ce qu'**une cloison (31, 31'), sur sa face frontale (34) orientée vers la paroi intérieure (12) de la cuve, est munie d'une arête (34) en forme de toit, les deux faces du toit (53) reliées par l'arête (34) formant un angle intérieur (54) de 90° environ.

13. Dispositif selon la revendication 12, **caractérisé en ce que** le rayon extérieur (55) de la section de l'arête (34) en forme de toit est égal à 0,5 mm environ.
